(19) Europäisches Patentamt

European Patent Office

Office européen des brevets

(11) **EP 0 658 775 B1**

(12) **FASCICULE DE BREVET EUROPEEN**

(45) Date de publication et mention
de la délivrance du brevet:
**23.02.2000 Bulletin 2000/08**

(51) Int Cl.⁷: **G01S 13/93**

(21) Numéro de dépôt: **94402842.2**

(22) Date de dépôt: **09.12.1994**

(54) **Dispositif d'anticollision, notamment pour véhicules automobiles**

Kollisionsschutzeinrichtung für Kraftfahrzeuge

Anticollision device for automotive vehicle

(84) Etats contractants désignés:
**DE FR GB**

(30) Priorité: **14.12.1993 FR 9314991**

(43) Date de publication de la demande:
**21.06.1995 Bulletin 1995/25**

(73) Titulaire: **THOMSON-CSF**
**75008 Paris (FR)**

(72) Inventeurs:
• **Avignon, Bruno**
  **F-92402 Courbevoie Cedex (FR)**
• **Barre, Charles**
  **F-92402 Courbevoie Cedex (FR)**
• **Canal, Yves**
  **F-92402 Courbevoie Cedex (FR)**

(74) Mandataire: **Benoit, Monique et al**
**Thomson-CSF Propriété Intellectuelle,**
**13, Avenue du Président Salvador Allende**
**94117 Arcueil Cédex (FR)**

(56) Documents cités:
**US-A- 4 148 028      US-A- 4 417 248**

## Description

La présente invention concerne un dispositif d'anticollision. Elle s'applique notamment à l'équipement de véhicules automobiles pour leur permettre d'éviter des obstacles les précédant, en cas de mauvaise visibilité par exemple. Plus généralement elle s'applique à toutes fonctions d'anticollision entre un objet mobile et un obstacle.

Il existe des systèmes connus d'anticollisions pour les véhicules automobiles. Un premier système connu utilise un radar millimétrique dont l'antenne possède généralement un faisceau d'ouverture égal à environ 2 à 3 degrés. Cette largeur du faisceau entraîne qu'à 100 m du véhicule, la largeur à -3dB du faisceau est d'environ 5 m et qu'à 200 m sa largeur est d'environ 10 m. Avec cette dernière largeur, une cible latérale non dangereuse, un panneau indicateur par exemple, peut être éclairée par le faisceau et donc provoquer une fausse alarme. En revanche, à une faible distance du véhicule, la finesse du faisceau a pour conséquence qu'un obstacle susceptible d'entrer en collision avec ce véhicule, peut ne pas être éclairé par le faisceau et donc passer inaperçu pour le système d'anticollision. Enfin, un chargement arrière important du véhicule ou un relief accidenté peut relever l'extrémité du faisceau par rapport à des obstacles précédant le véhicule, ces derniers n'étant alors pas éclairés.

Pour remédier à ces inconvénients, une antenne à balayage pourrait être utilisée. Cependant une telle solution est coûteuse et ne peut donc être adaptée à une utilisation sur des véhicules de grandes séries.

Des systèmes optiques d'anticollision sont connus. Ils sont performants par temps clairs mais pratiquement inexploitable par mauvais temps, pluie ou brouillard par exemple.

Un brevet US 4 148 028 décrit un dispositif pour éviter une collision entre un véhicule et un obstacle.

Le but de l'invention est de palier les inconvénients précités, notamment en permettant d'obtenir des informations fiables et sûres sur un risque de collision.

A cet effet, l'invention a pour objet un dispositif tel que défini par la revendication 1.

L'invention a pour principaux avantages qu'elle fonctionne par tous temps, qu'elle s'adapte à tous types de véhicules, qu'elle est simple à mettre en oeuvre et qu'elle est économique.

D'autres caractéristiques et avantages de l'invention apparaîtront à l'aide de la description qui faite en regard de dessins annexés qui représentent :

- les figures 1a et 1b, un objet mobile s'approchant d'un obstacle à deux instants différents dans un cas où il n'y a pas de risque de collision ;
- les figures 2a et 2b, l'objet mobile s'approchant de l'obstacle à deux instants différents dans un cas où il y a un risque de collision ;
- la figure 3, un diagramme d'interférence issu des émissions d'au moins deux antennes solidaires de l'objet mobile ;
- la figure 4, une illustration des angles que fait l'obstacle avec les antennes précitées ;
- les figures 5a et 5b, des reconstitutions de signaux obtenus à partir de chacune des antennes, les antennes fonctionnant séquentiellement;
- la figure 6, un mode de réalisation possible d'un dispositif selon l'invention ;
- la figure 7, un autre mode de réalisation possible complétant le précédent pour définir, par comparaison à un seuil, un risque de collision ;
- la figure 8, une illustration d'écarts latéraux entre l'objet mobile et l'obstacle.

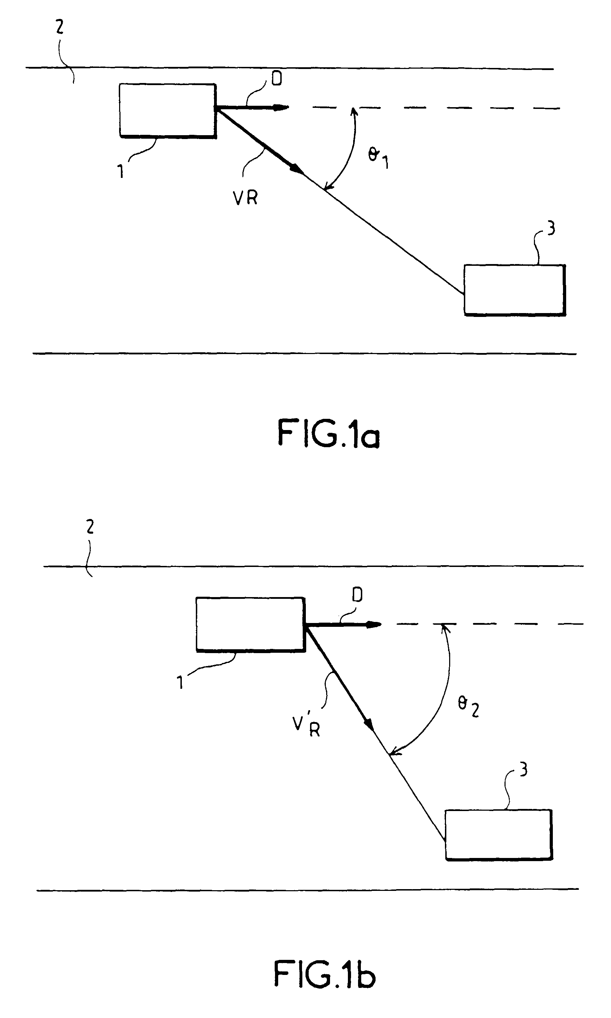

La figure 1 présente, à un instant $t_1$ donné, un objet mobile 1, un véhicule par exemple, circulant par exemple sur une voie et se rapprochant d'un obstacle 3, un autre véhicule par exemple ou tout autre type d'obstacle possible. L'objet mobile 1 possède un vecteur D orienté dans le sens de son déplacement et un vecteur vitesse $V_R$ vers l'obstacle 3, le module du vecteur vitesse exprimant la vitesse relative entre ce dernier et l'objet mobile 1. Le vecteur D indique la direction donnée dans laquelle se dirige l'objet mobile 1. A cet instant $t_1$ donné, le vecteur vitesse relative $V_R$ et le vecteur déplacement font entre eux un premier angle $\theta_1$.

La figure 1b présente l'objet mobile 1 et l'obstacle 3 à un instant $t_2$ postérieur à l'instant $t_1$ précédent, l'objet mobile 1 s'étant encore rapproché de l'obstacle 3. Ces deux derniers présentent maintenant un vecteur vitesse relatif $V_R'$ faisant un deuxième angle $\theta_2$ avec le vecteur déplacement D de l'obstacle mobile 1. Dans le cas de rapprochement illustré par les figures 1a et 1b, l'objet mobile 1 se rapproche certes de l'obstacle 1 mais ne se dirige pas vers lui, il n'y a donc pas de risque de collision.

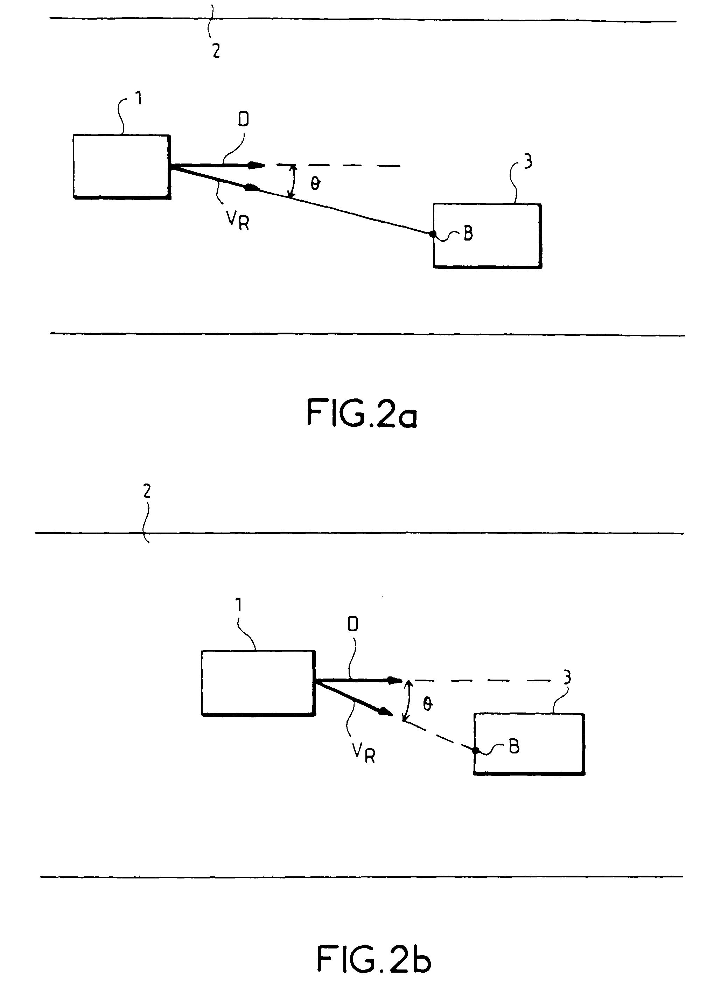

Les figures 2a et 2b illustrent un cas de risque de collision entre l'objet mobile 1 et l'obstacle 3.

La figure 2a présente les positions relatives de l'objet mobile 1 et de l'obstacle 3 à un premier instant $t_1$ donné.

La figure 2b présente leurs positions relatives à un deuxième instant $t_2$ postérieur au précédent, l'objet mobile s'étant rapproché de l'obstacle 3.

Le principe de fonctionnement du dispositif selon l'invention exploite notamment le fait que, quand l'objet mobile 1 se dirige vers l'obstacle 3 au point de risquer d'entrer en collision avec ce dernier, le vecteur vitesse relatif $V_R$ pointant un point B donné de l'obstacle 3, l'angle $\theta$ entre le vecteur déplacement D et le vecteur vitesse relatif $V_R$

reste sensiblement constant au cours du rapprochement entre l'objet mobile et l'obstacle, l'amplitude du vecteur relatif $V_R$ pouvant éventuellement varier. Cet angle constant θ est illustré par les figures 2a et 2b prises à deux instants $t_1$, $t_2$ au cours de ce rapprochement. Dans le cas des figures 1a et 1b où il y a rapprochement sans risque de collision, l'angle $θ_2$ de l'instant $t_2$ est différent de l'angle $θ_1$ de l'instant précédent $t_1$.

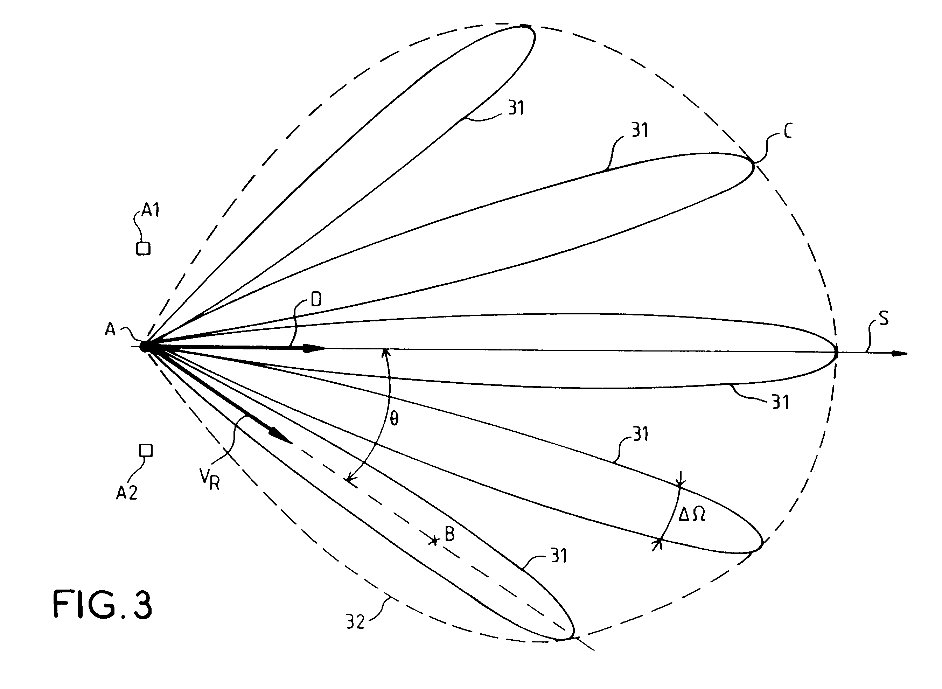

Le dispositif selon l'invention utilise au moins deux antennes $A_1$, $A_2$, représentées par leurs positions relatives sur la figure 3, ces positions pouvant être représentées par des points en raison de la grande distance séparant les antennes de l'obstacle. Par ailleurs, ces points peuvent représenter par exemple l'origine des faisceaux des antennes $A_1$, $A_2$. Ces deux antennes $A_1$, $A_2$ émettent chacune un signal hyperfréquence, l'obstacle 3 étant susceptible de renvoyer un écho. Dans le cas d'application à un véhicule automobile, ces antennes sont par exemple placées chacune au niveau d'un phare avant. Dans le cas où ces deux antennes $A_1$, $A_2$ émettent par exemple simultanément, elles produisent des lobes d'interférence 31. La distance des antennes à un point C de l'extrémité d'un lobe appartenant l'enveloppe 32 du diagramme d'une antenne est donnée par la relation suivante :

$$\overline{A_1C} = \overline{A_2C} + k\,λ \tag{1}$$

où $\overline{A_1C}$ et $\overline{A_2C}$ représentent respectivement la distance entre le point C et la première antenne $A_1$, et la distance entre le point C et la deuxième antenne $A_2$, où λ représente la longueur de l'onde émise par les antennes $A_1$, $A_2$ et k un nombre entier positif.

Chaque lobe d'interférence 31 a par ailleurs une largeur à -3dB, ΔΩ, définie approximativement par la relation suivante :

$$ΔΩ = \frac{65°λ}{A_1A_2} \tag{2}$$

où, λ représentant toujours la longueur de l'onde émise par les antennes $A_1$, $A_2$ et $\overline{A_1A_2}$ représente la distance entre celles-ci, cette distance est par exemple égale à la largeur de l'objet mobile 1.

En supposant que l'obstacle dont la position est repérée par un point B se situe dans un lobe d'interférence 31 comme l'illustre la figure 3, ce point B renvoie une énergie E vers des moyens de réception associés aux antennes $A_1$, $A_2$. Le point B possède une vitesse relative par rapport à un point A de l'objet mobile, la vitesse relative étant représentée par un vecteur $V_R$ d'origine en A et dirigé vers le point B, le point A était par exemple situé au milieu des deux antennes $A_1$, $A_2$. Ce point A possède un vecteur déplacement D qui est celui de l'objet mobile 1.

Le vecteur vitesse relatif $V_R$ fait un angle θ avec le vecteur déplacement D.

Tant que le point B de l'obstacle reste sur une droite passant par exemple par le milieu des deux antennes $A_1$, $A_2$, cette droite faisant un angle constant avec le vecteur déplacement D, il peut y avoir risque de collision.

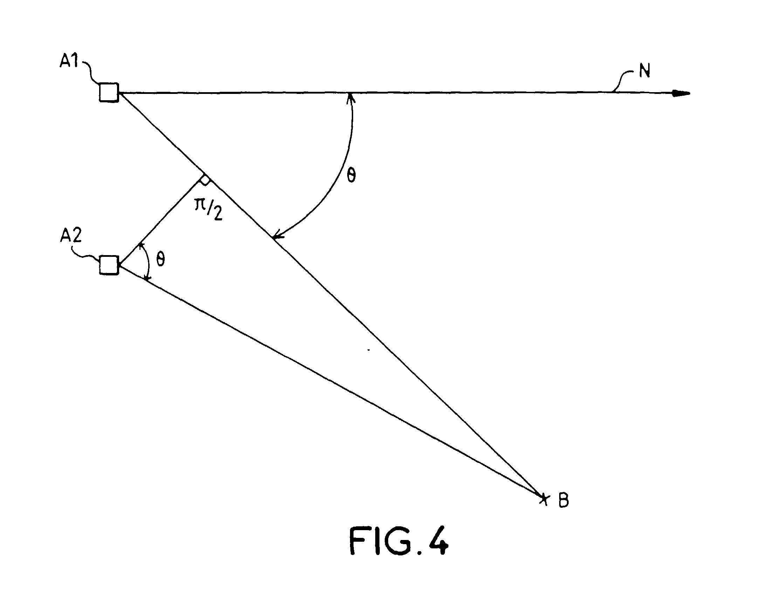

La figure 4 illustre les angles que fait le point B précité avec les antennes $A_1$, $A_2$. Le vecteur, d'origine au point de repère de la première antenne $A_1$ et d'extrémité B, fait un angle avec un axe N passant par le point de repère de la première antenne $A_1$ et parallèle à l'axe de symétrie S précité qui est sensiblement égal à l'angle θ précédemment défini entre le vecteur vitesse relatif $V_R$ et le vecteur déplacement D à cause du fait que la distance entre les deux antennes $A_1$, $A_2$ et donc la distance entre le milieu A de ces antennes et la première antenne $A_1$ est très petite devant la distance des antennes au point B de l'obstacle ;

L'énergie E reçue de l'obstacle par les moyens de réception associés aux deux antennes peut se formuler selon la relation suivante, si les antennes $A_1$, $A_2$ émettent en phase :

$$E = E_1\cos\frac{2π\overline{A_1B}}{λ} + E_2\cos\frac{2π\overline{A_2B}}{λ} \tag{3}$$

$\overline{A_1B}$ et $\overline{A_2B}$ représentant respectivement la distance entre le point B et la première antenne $A_1$ et la distance entre le point B et la deuxième antenne $A_2$, $E_1$ et $E_2$ étant respectivement l'énergie renvoyée par l'obstacle en fonction de l'énergie envoyée par la première antenne $A_1$ et par la deuxième antenne $A_2$.

Si $E_1 = E_2 = E_0$, cas où les deux antennes envoient par exemple la même énergie, l'énergie précédente E peut se formuler selon la relation suivante:

$$E = Eo\left(\cos\frac{2\pi\,\overline{A_1B}}{\lambda} + \cos\frac{2\pi\,\overline{A_2B}}{\lambda}\right) \quad (4)$$

La valeur $\overline{A_1B}$ - $\overline{A_2B}$, constitue la différence de marche, elle est égale à $\overline{A_1A_2}$ sin θ, θ étant l'angle précédemment défini.

L'énergie E de l'écho reçu peut alors s'écrire :

$$E = 2\,Eo\cos\left[\frac{2\pi}{\lambda}\left(\overline{A_1B} + \overline{A_2B}\right)\right]\cos\left[\frac{2\pi}{\lambda}\,\overline{A_1A_2}\sin\theta\right] \quad (5)$$

En cas d'absence de risque de collision, l'angle θ fluctue, donc l'énergie reçue fluctue aussi.

En cas de risque de collision, l'angle θ reste constant et donc, aux effets de rapprochement en distance contenus dans le premier terme en cosinus de la relation (5), l'énergie E de l'écho reçu ne fluctue pas. L'analyse de cette énergie E reçue en permettant d'analyser les variations de l'angle θ pourrait permettre de prévoir les risques de collision. Cependant, deux inconvénients apparaissent. Le premier est du fait que si l'obstacle se situe entre les lobes d'interférence 31, il n'est pas repéré par les moyens de détection associés aux antennes et peut donc éventuellement ne pas être évité.

Selon l'invention, pour pallier cet inconvénient, les deux antennes $A_1$, $A_2$ émettent par exemple séquentiellement de façon à ce qu'à chaque instant toute la zone contenue à l'intérieur de l'enveloppe 32 du diagramme d'une antenne soit éclairée. Il n'y a donc plus de lobes d'interférences 31, donc plus de trous d'interférence. Ce résultat étant atteint, le dispositif selon l'invention comprend des moyens pour conserver la phase instantanée des échos reçus de l'obstacle B suite à chaque émission d'antenne, ces moyens sont par exemple des extracteurs de distance conservant la phase instantanée d'une onde reçue, ce que réalisent notamment tous les radars à effet Doppler. Il est alors possible de reconstituer un écho reçu de l'obstacle B dont la phase reste associée aux distances $\overline{A_1B}$ et $\overline{A_2B}$ précédemment définies et permettant donc d'obtenir un signal fonction de l'angle θ. Les moyens pour conserver la phase sont par exemple constitués de moyens de corrélation de l'écho reçu avec un signal d'horloge de phase constante dans un radar à modulation de fréquence ou à saut de phase. Un de ces moyens est par exemple constitué d'une porte temporelle d'un radar à impulsion conservant la phase instantanée à chaque récurrence d'émission, cette phase portant l'effet Doppler.

Si la fréquence d'utilisation séquentielle des deux antennes $A_1$, $A_2$ est au moins égale au double de la plus haute fréquence Doppler attendue, alors le signal Doppler peut être reconstitué à partir des échantillons pour chaque émission d'antenne $A_1$, $A_2$ en application du théorème de Shannon.

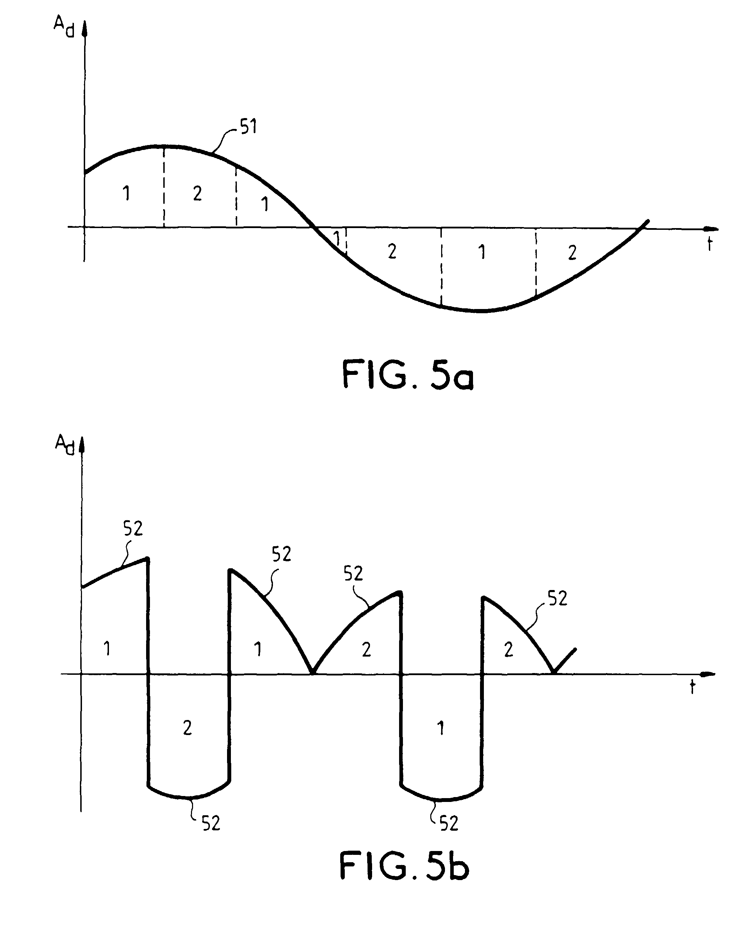

Les figures 5a et 5b présentent en fonction du temps, l'amplitude Ad des signaux reconstitués à partir des échantillons reçus pour chaque émission d'antenne dans le cas où l'obstacle B appartient respectivement à l'endroit d'un ancien lobe d'interférence 31 ou à l'endroit d'un ancien trou d'interférence.

Sur la figure 5a, le signal 51 est reconstitué à partir d'échantillons, en phase, produits successivement à partir de l'émission de l'une ou l'autre antenne $A_1$, $A_2$, les échantillons de signal issus de la première antenne $A_1$ étant repérés par des portions comportant le chiffre 1 et les échantillons de signal issus de la deuxième antenne $A_2$ étant repérés par des portions comportant le chiffre 2.

Dans le cas de la figure 5b, l'obstacle B se trouvant à l'endroit d'un trou d'interférence, les échantillons issus des deux antennes sont alors en opposition de phase. Le signal reconstitué 52 à partir des échantillons reçus présente alors une même surface de chaque côté de l'axe des temps t. Ce signal filtré par un filtre passe-bas sous la fréquence de commutation des deux antennes $A_1$, $A_2$ présente donc un résultat nul. Pour obtenir un résultat non nul, selon l'invention, au lieu d'additionner les voies de réception associées à chaque antenne, celles-ci sont par exemple retranchées l'une à l'autre pour obtenir un signal non nul après filtrage passe-bas.

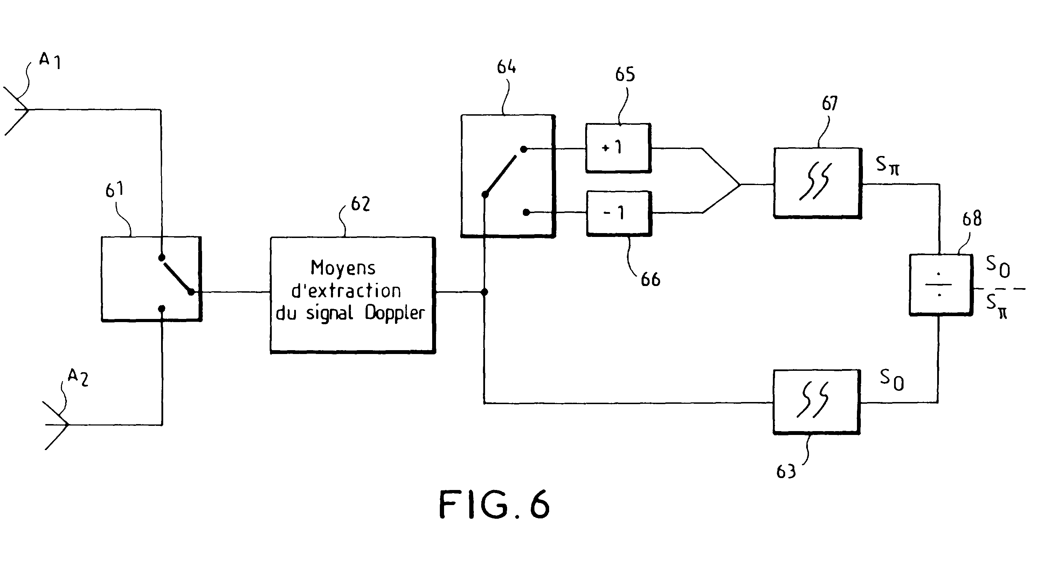

La figure 6 présente un mode de réalisation possible du dispositif selon l'invention permettant d'obtenir deux signaux So, Sπ après filtrage passe-bas. Le premier signal So est obtenu par filtrage du signal 51 reconstitué à partir des échantillons Doppler en phase et le signal Sπ est obtenu par filtrage du signal 52 obtenu à partir des échantillons Doppler en opposition de phase mais préalablement remis en phase par inversion du signe, c'est-à-dire déphasage de π, des signaux issus d'une des antennes, et cela de façon à obtenir un signal filtré non nul.

Les deux antennes $A_1$, $A_2$ sont reliées à des premiers moyens de commutation 61, ces derniers commutant séquentiellement les échantillons d'échos reçus de l'obstacle B par la première antenne $A_1$ et par la deuxième $A_2$. La

sortie des premiers moyens de commutation 61 est reliée à des moyens 62 d'extraction des signaux Doppler, lesquels caractérisent la phase instantanée des échantillons d'échos reçus successivement par l'une ou l'autre antenne. La sortie des moyens d'extraction des signaux Doppler est reliée d'une part à un premier filtre passe-bas 63 dont la sortie délivre le signal So et d'autre part à des deuxièmes moyens de commutation 64 dont la commutation est synchrone des premiers moyens de commutation 61. Les deuxièmes moyens de commutation 64 possèdent une première sortie reliée à une première voie 65 qui n'inverse pas son signal d'entrée et une deuxième sortie reliée à une deuxième voie 66 qui inverse son signal d'entrée, les deux voies 65, 66 étant reliées ensemble à leurs sorties à l'entrée d'un deuxième filtre passe-bas 67 dont la sortie délivre le signal Sπ. Les positions initiales des moyens de commutation 61, 64 sont par exemple réglées de façon à ce que les signaux obtenus à l'entrées des filtres 63, 67 ne produisent pas à la sortie de ces derniers des signaux nuls, mais au contraire des signaux non nul, So, Sπ. Selon l'invention, le rapport So/Sπ de ces signaux est analysé car il donne une bonne indication de la variation de l'angle θ précédemment défini, ainsi d'ailleurs que de la valeur de cet angle. Pour cela les sortie des filtres 63, 67 sont par exemple reliés à des moyens de division de l'énergie du signal So par l'énergie du signal Sπ.

En application de la relation (4) précédemment établie :

$$So = Eo\left( \cos 2\pi \frac{\overline{A_1 B}}{\lambda} + \cos 2\pi \frac{\overline{A_2 B}}{\lambda} \right) \qquad (6)$$

et

$$S\pi = Eo\left( \cos 2\pi \frac{\overline{A_1 B}}{\lambda} - \cos 2\pi \frac{\overline{A_2 B}}{\lambda} \right) \qquad (7)$$

le signal issu de la deuxième antenne $A_2$ étant par exemple celui qui est inversé par la deuxième voie 66, donc déphasé de π, d'où le deuxième terme - $\cos 2\pi \frac{\overline{A_2 B}}{\lambda}$ dans l'expression de Sπ au lieu de $\cos 2\pi \frac{\overline{A_2 B}}{\lambda}$ dans l'expression de So.

Des relations (6) et (7), il résulte que :

$$\frac{So}{S\pi} = \frac{\cos 2\pi \frac{\overline{A_1 B}}{\lambda} + \cos 2\pi \frac{\overline{A_2 B}}{\lambda}}{\cos 2\pi \frac{\overline{A_1 B}}{\lambda} - \cos 2\pi \frac{\overline{A_2 B}}{\lambda}} \qquad (8)$$

De la relation (8) et du fait que :
$\overline{A_1 B} = \overline{A_2 B} + \overline{A_1 A_2}$ sin θ, *il vient* :

$$\frac{So}{S\pi} = \cot g\left( \frac{2\pi \overline{A_2 B}}{\lambda} + \frac{\pi \overline{A_1 A_2}\ \sin\theta}{\lambda} \right) \cot g\left( \frac{\pi \overline{A_1 A_2}\ \sin\theta}{\lambda} \right)$$

soit

$$\frac{So}{S\pi} = \frac{1 - tg\left( 2\pi \frac{\overline{A_2 B}}{\lambda} \right) tg\left( \pi \frac{\overline{A_1 A_2}}{\lambda}\ \sin\theta \right)}{tg\left( 2\pi \frac{\overline{A_2 B}}{\lambda} \right) + tg\left( \pi \frac{\overline{A_1 A_2}\ \sin\theta}{\lambda} \right)} \ x \ \frac{1}{tg\left( \pi \frac{\overline{A_1 A_2}\ \sin\theta}{\lambda} \right)}$$

c'est-à-dire que $\frac{So}{S\pi}$ peur s'exprimer comme une fonction F de

$$tg\left(\pi\frac{\overline{A_1A_2}}{\lambda}\ \sin\ \theta\right):$$

$$\frac{So}{S\pi} = F\left[tg\left(\pi\frac{\overline{A_1A_2}}{\lambda}\ \sin\ \theta\right)\right] \qquad (9)$$

le signal $\frac{So}{S\pi}$ permet donc d'analyser la variation de l'angle θ. Il peut d'ailleurs donner une mesure de cet angle. Cette variation de l'angle θ est périodique dans le diagramme d'interférence, c'est à dire que θ est connu à $k\ \Delta\Omega$ près, k étant un nombre entier et $\Delta\Omega$ étant la largeur à -3db des lobes d'interférence défini par la relation (2) précédente.

Un risque de collision a lieu quand $\frac{d\theta}{dt}$ = o, sensiblement.

Etant donné que $\frac{d(So/S\pi)}{dt} = \frac{d(So/S\pi)}{d\theta} \times \frac{d\theta}{dt}$, en analysant le rapport $\frac{S\theta}{S\pi}$, un risque de collision a lieu quand $\frac{d(So/S\pi)}{dt}$ = O. En pratique, la valeur absolue de $\frac{d(So/S\pi)}{dt}$ est par exemple comparée à un seuil So.

$$\text{Si}\ \left|\frac{d\left(So\ /\ S\pi\right)}{dt}\right| \leq THo$$

alors on considère qu'il y a un risque de collision.

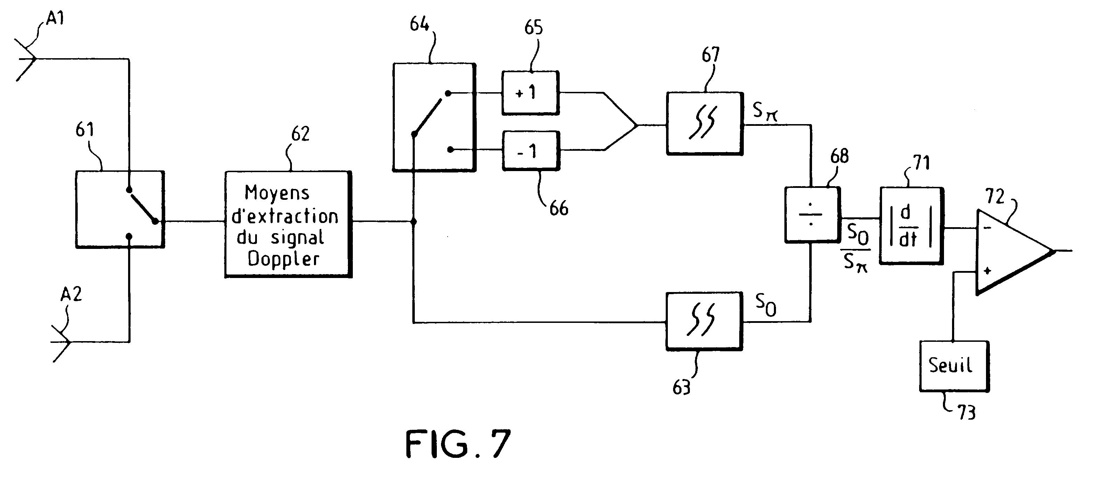

La figure 7 illustre un exemple de mise en oeuvre de la détermination de risque de collision en complétant le mode de réalisation de la figure 6.

La sortie des moyens de division 68 donnant le rapport $So/S\pi$ est relié à l'entrée de moyens 71 de dérivation par rapport au temps, lesquels donnent par exemple de plus la valeur absolue de $\frac{d(So/S\pi)}{dt}$. Cette dernière est par exemple affichée à l'entrée négative de moyens de comparaison 72 dont l'entrée positive est reliée à un seuil 73. L'information obtenue en sortie des moyens de comparaison 72 indique l'existence ou non d'un risque de collision, un signal positif indiquant par exemple un risque de collision et un signal négatif ou nul, l'absence de risque de collision.

Selon l'invention, la valeur du signal dérivé $\frac{d(So/S\pi)}{dt}$ est un indicateur, pour chaque distance entre l'objet mobile 1 et l'obstacle 3, de leur écart latéral.

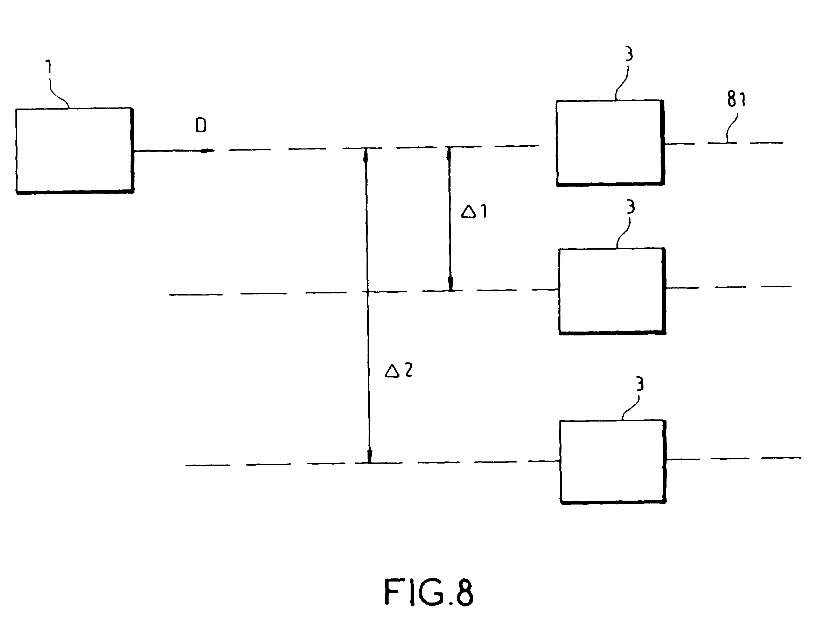

La figure 8 illustre différents écarts latéraux.

Si l'objet mobile se dirige vers l'obstacle 3, c'est à dire si celui ci se trouve sur une droite 81 comprenant le vecteur déplacement D de l'objet mobile 1, alors $\frac{d(So/S\pi)}{dt}$ est théoriquement nulle.

Si l'objet mobile 1 ne se dirige pas vers l'obstacle 3 mais conserve avec ce dernier un premier écart latéral Δ1, alors $\frac{d(So/S\pi)}{dt}$ est non nul et si l'objet mobile conserve avec l'obstacle un deuxième écart latéral Δ2 supérieur au premier Δ1, alors $\frac{d(So/S\pi)}{dt}$ est encore non nul, mais est de plus supérieur au signal dérivé $\frac{d(So/S\pi)}{dt}$ correspondant au premier écart latéral Δ1.

Le seuil 73 précédemment défini pour définir le risque de collision peut donc être dépendant de la distance pour tolérer un écart latéral constant entre l'objet mobile 1 et l'obstacle 3, la valeur $\frac{d(So/S\pi)}{dt}$ étant représentative en fonction de la distance entre ces deux derniers de leur écart latéral. La définition d'un écart latéral en dessous duquel un risque de collision est considéré permet notamment d'améliorer la sécurité de l'objet mobile 1. Cela permet notamment de s'affranchir des effets d'un faisceau conique, trop étroit à courte distance et trop large à grande distance. La valeur de l'écart toléré peut par exemple varier en fonction de différents paramètres, liés aux conditions de circulation, aux conditions de reliefs, aux conditions d'environnement ou aux conditions atmosphériques notamment.

Enfin, outre la mesure de l'angle θ précité, le dispositif selon l'invention peut mesurer la vitesse de l'obstacle ainsi que sa distance à l'objet mobile pour affiner le risque de collision.

Le dispositif anticollision selon l'invention s'applique par exemple à des véhicules automobiles. Il peut être appliqué à tous type d'objets mobiles, des aéronefs par exemple. Les obstacles à éviter peuvent être de toutes natures.

**Revendications**

1.  Dispositif pour éviter une collision entre un objet mobile (1) et un obstacle (3, R), l'objet mobile se dirigeant dans une direction donnée selon un vecteur déplacement (D) et ayant un vecteur vitesse relative ($V_R$) dirigé vers l'obstacle (3), le dispositif comportant au moins deux antennes ($A_1$, $A_2$) solidaires de l'objet mobile (1) émettant un signal hyperfréquence susceptible d'être reçu par l'obstacle (3), des moyens de réception ($A_1$, $A_2$, 61, 62, 64, 65, 66) et des moyens d'analyse (63, 67, 68, 71, 72, 73) des échos reçus de l'obstacle (3), les moyens d'analyse déterminant la variation par rapport au temps de l'angle ($\theta$) entre le vecteur déplacement (D) et le vecteur vitesse relative ($V_R$), une variation sensiblement nulle de l'angle ($\theta$) indiquant un risque de collision, les antennes émettant séquentiellement, l'une après l'autre, le dispositif comportant des moyens de conservation (62) de la phase instantanée des échantillons d'échos reçus lors de chaque émission d'antenne, de façon à obtenir un signal Doppler (51, 52) constitué à partir de ces échantillons reçus, le signal Doppler contenant une information sur la valeur de l'angle ($\theta$), comprenant des premiers moyens de commutation (61) des signaux reçus par les antennes ($A_1$, $A_2$), la sortie de ces moyens de commutation étant reliée à des moyens d'obtention du signal Doppler (62) caractérisé en ce que la sortie desdits moyens est reliée d'une part à un premier filtre passe-bas (63) et d'autre part à des deuxièmes moyens de commutation (64) synchrones des premiers moyens de commutation (61) et commutant le signal Doppler vers une voie inverseuse (66) ou vers une voie non inverseuse (65), la voie non inverseuse (65) étant commutée quand une première antenne ($A_1$) est commutée et la voie inverseuse (66) étant commutée quand l'autre antenne ($A_2$) est commutée, les deux voies (65, 66) étant connectées à leurs sorties à l'entrée d'un deuxième filtre passe-bas(67), les sorties des filtres (63, 67) étant reliées à des moyens de division (68) du signal (So) de sortie du premier filtre (63) par le signal ($S\pi$) de sortie du deuxième filtre (67), le rapport des signaux *(So/S$\pi$)* contenant une information sur la valeur de l'angle ($\theta$).

2. Dispositif selon la revendication 1, caractérisé en ce que les antennes ($A_1$, $A_2$) servent à l'émission et à la réception.

3. Dispositif selon l'une quelconque des revendications précédentes, caractérisé en ce qu'il comprend des moyens d'analyse (71, 72, 73) de la dérivée par rapport au temps du rapport des signaux *(So / S$\pi$),* le passage en dessous d'un seuil (73) de la valeur absolue de la dérivée

$$\left( \left| \frac{d\ (So\ /\ S\pi)}{dt} \right| \right)$$

indiquant un risque de collision.

4. Dispositif selon l'une quelconque des revendications précédentes, caractérisé en ce que la sortie des moyens de division (68) est reliée à l'entrée de moyens de dérivation (71) donnant la valeur absolue de la dérivée par rapport au temps du rapport des signaux ($So/S\pi$), la sortie des moyens de dérivation étant comparée avec un seuil (73) par l'intermédiaire de moyens de comparaison (72) dont la sortie délivre un signal donnant le risque de collision.

5. Dispositif selon l'une quelconque des revendications 3 ou 4, caractérisé en ce que le seuil (73) est fonction de la distance entre l'objet mobile (1) et l'obstacle (3) pour définir un écart latéral un l'intérieur duquel la présence de l'obstacle indique un risque de collision.

6. Dispositif selon l'une quelconque des revendications précédentes, caractérisé en ce que l'objet mobile étant un véhicule automobile, les antennes ($A_1$,$A_2$) sont placées chacune au niveau d'un phare avant du véhicule.

7. Dispositif selon l'une quelconque des revendications précédentes, caractérisé en ce qu'il mesure la vitesse de l'obstacle (3) et sa distance à l'objet mobile (1), ces mesures étant combinées à la mesure de l'angle ($\theta$) pour indiquer un risque de collision.

**Patentansprüche**

1. Vorrichtung zur Vermeidung von Kollisionen zwischen einem beweglichen Objekt (1) und einem Hindernis (3, R), wobei das bewegliche Objekt sich in einer gegebenen Richtung gemäß einem Bewegungsvektor (D) bewegt und einen relativen Geschwindigkeitsvektor ($V_R$) in Richtung zum Hindernis (3) besitzt, wobei die Vorrichtung mindestens zwei am beweglichen Objekt (1) angebrachte Antennen (A1, A2), die ein Hochfrequenzsignal aussenden, das auf das Hindernis (3) auftreffen kann, Mittel (A1, A2, 61, 62, 64, 65, 66) zum Empfang und Mittel (63, 67, 68, 71, 72, 73) zur Analyse der vom Hindernis (3) kommenden Echos sowie Analysemittel aufweist, die die zeitliche Veränderung des Winkels ($\theta$) zwischen dem Bewegungsvektor (D) und dem relativen Geschwindigkeitsvektor ($V_R$)

bestimmen, wobei eine Veränderung des Winkels (θ) um einen Wert von im wesentlichen null eine Kollisionsgefahr anzeigt und die Antennen abwechselnd nacheinander senden, wobei die Vorrichtung weiter Mittel (62) zur Konservierung der augenblicklichen Phase der bei jeder Antennenaussendung empfangenen Echotastproben, sodaß ein Dopplersignal (51, 52) ausgehend von diesen empfangenen Tastproben erhalten wird, das eine Information über den Wert des Winkels (θ) enthält, sowie erste Schaltmittel (61) zur Umschaltung der von den Antennen (A1, A2) empfangenen Signale enthält, deren Ausgang an Mittel (62) zur Erzeugung des Dopplersignals angeschlossen sind, dadurch gekennzeichnet, daß der Ausgang dieser Mittel einerseits mit einem ersten Tiefpaßfilter (63) und andrerseits mit zweiten Schaltmittels (64) verbunden ist, die mit den ersten Schaltmitteln (61) synchronisiert sind und das Dopplersignal abwechselnd an einen invertierenden Kanal (66) und einen nicht-invertierenden Kanal (65) leiten, wobei der nicht invertierende Kanal durchgeschaltet wird, wenn eine erste Antenne (A1) eingeschaltet ist, und der invertierende Kanal (66), wenn die andere Antenne (A2) eingeschaltet ist, wobei die beiden Kanäle (65, 66) mit ihren Ausgängen an den Eingang eines zweiten Tiefpaßfilters (67) angeschlossen sind und die Ausgänge der Filter (63, 67) an Mittel (68) zur Division des Ausgangssignals (So) des ersten Filters (63) durch das Ausgangssignmal (Sπ) des zweiten Filters (67) angeschlossen sind, sodaß das Verhältnis (So/Sπ) der Signale eine Information über den Wert des Winkels (θ) enthält.

2. Vorrichtung nach Anspruch 1, dadurch gekennzeichnet, daß die Antennen (A1, A2) als Sende- und Empfangsantennen dienen.

3. Vorrichtung nach einem beliebigen der vorstehenden Ansprüche, dadurch gekennzeichnet, daß sie Mittel (71, 72, 73) zur Analyse des zeitlichen Differentials des Verhältnisses (So/Sπ) enthält, wobei die Unterschreitung einer Schwelle (73) des Absolutwerts des Differentials |d(So/Sπ)/dt| eine Kollisionsgefahr anzeigt.

4. Vorrichtung nach einem beliebigen der vorstehenden Ansprüche, dadurch gekennzeichnet, daß der Ausgang der Divisionsmittel (68) an den Eingang von Differenziermitteln (71) angeschlossen ist, die den Absolutwert des zeitlichen Differentials des Verhältnisses (So/Sπ) liefern, wobei der Ausgang der Differenziermittel mit einem Schwellwert (73) über Vergleichsmittel (72) verglichen wird, deren Ausgang ein Signal liefert, das die Kollisionsgefahr bezeichnet.

5. Vorrichtung nach einem beliebigen der Ansprüche 3 und 4, dadurch gekennzeichnet, daß die Schwelle (73) von der Entfernung zwischen dem beweglichen Objektes (1) und dem Hindernis (3) abhängt, um einen seitlichen Abstand zu definieren, innerhalb dem das Hindernis eine Kollisionsgefahr bedeutet.

6. Vorrichtung nach einem beliebigen der vorstehenden Ansprüche, dadurch gekennzeichnet, daß das bewegliche Objekt ein Kraftfahrzeug ist und daß die Antennen (A1, A2) je in Höhe eines der vorderen Scheinwerfer des Fahrzeugs liegen.

7. Vorrichtung nach einem beliebigen der vorstehenden Ansprüche, dadurch gekennzeichnet, daß sie die Geschwindigkeit des Hindernisses (3) und seine Entfernung zum beweglichen Objekt (1) mißt und daß diese Messungen mit der Messung des Winkels (θ) kombiniert werden, um eine Kollisionsgefahr anzuzeigen.

## Claims

1. Device for preventing a collision between a moving object (1) and an obstacle (3, R), the moving object heading in a given direction along a displacement vector (D) and having a relative speed vector ($V_R$) directed towards the obstacle (3), the device comprising at least two antennas ($A_1$, $A_2$) fixedly joined to the moving object (1) and transmitting a UHF signal liable to be received by the obstacle (3), means ($A_1$, $A_2$, 61, 62, 64, 65, 66) for receiving and means (63, 67, 68, 71, 72, 73) for analysing the echos received from the obstacle (3), the analysis means determining the variation with respect to time of the angle (θ) between the displacement vector (D) and the relative speed vector ($V_R$), a substantially zero variation of the angle (θ) indicating a risk of collision, the antennas transmitting sequentially one after the other, the device comprising means (62) for preserving the instantaneous phase of the echo samples received during each antenna transmission, so as to obtain a Doppler signal (51, 52) constituted by said received samples, the Doppler signal containing information about the value of the angle (θ), the device having first switching means (61) for the signals received by the antennas ($A_1$, $A_2$), the output of said switching means being connected to means for obtaining the Doppler signal (62),
characterised in that the output of said means is connected on the one hand to a first low-pass filter (63) and on the other hand to second switching means (64) synchronous with the first switching means (61) and switching the Doppler signal to an inverter channel (66) or to a non-inverter channel (65), the non-inverter channel (65) being switched over when a first antenna ($A_1$) is switched over and the inverter channel (66) being switched over when the other antenna ($A_2$) is switched over, the two channels (65, 66) being wired at their outputs to the input of a second low-pass filter (67), the outputs of the filters (63, 67) being connected to means (68) for dividing the output signal (So) of the first filter (63) by the output signal ($S\pi$) of the second filter (67), the ratio of the signals (So/$S\pi$) containing information about the value of the angle ($\theta$).

2. Device according to claim 1, characterised in that the antennas ($A_1$, $A_2$) are used for transmitting and receiving.

3. Device according to either of the preceding claims, characterised in that it comprises means (71, 72, 73) for computing the derivative with respect to time of the ratio of the signals (So/$S\pi$), the absolute value of the derivative

$$\left\|\frac{d\ (So\ /\ S\pi)}{dt}\right\|$$

falling below a threshold (73) indicating a risk of collision.

4. Device according to any of the preceding claims, characterised in that the output of the dividing means (68) is connected to the input of the derivative means (71) giving the absolute value of the derivative with respect to time of the ratio of the signals (So/$S\pi$), the output of the derivative means being compared with a threshold (73) via comparison means (72) whose output supplies a signal giving the risk of collision.

5. Device according to either of claims 3 and 4, characterised in that the threshold (73) is a function of the distance between the moving object (1) and the obstacle (3) to define a lateral divergence within which the presence of the obstacle indicates a risk of collision.

6. Device according to any of the preceding claims, characterised in that the moving object being a motor vehicle, the antennas ($A_1$, $A_2$) are each positioned level with a front headlamp of the vehicle.

7. Device acording to any of the preceding claims, characterised in that it measures the speed of the obstacle (3) and the distance thereof to the moving object (1), these measurements being combined with the measurement of the angle ($\theta$) in order to indicate a risk of collision.

FIG.1a

FIG.1b

FIG.2a

FIG.2b

FIG.3

FIG.4

FIG. 5a

FIG. 5b

FIG.6

FIG. 7

EP 0 658 775 B1

FIG.8